Europäisches Patentamt

European Patent Office

Office européen des brevets

(19)

(11) Veröffentlichungsnummer: **0 283 704 B1**

(12)

# EUROPÄISCHE PATENTSCHRIFT

(45) Veröffentlichungstag der Patentschrift: **18.09.91**

(51) Int. Cl.⁵: **G01D 18/00, G01G 23/36**

(21) Anmeldenummer: **88102090.3**

(22) Anmeldetag: **12.02.88**

(54) **Messgerät, insbesondere Waage,mit Ausgabegerät und Kennzeichnungsschild.**

(30) Priorität: **25.03.87 DE 3709717**

(43) Veröffentlichungstag der Anmeldung:
**28.09.88 Patentblatt 88/39**

(45) Bekanntmachung des Hinweises auf die
Patenterteilung:
**18.09.91 Patentblatt 91/38**

(84) Benannte Vertragsstaaten:
**CH FR GB IT LI NL**

(56) Entgegenhaltungen:
**EP-A- 0 153 738**
**EP-A- 0 186 112**
**DE-A- 3 129 408**

(73) Patentinhaber: **Mettler-Toledo (Albstadt) GmbH**
**Gartenstrasse 86**
**W-7470 Albstadt-Ebingen(DE)**

(72) Erfinder: **Mürdter, Herbert**
**Rossbergstrasse 63**
**W-7470 Albstadt 1-Tailfingen(DE)**
Erfinder: **Ast, Adolf**
**Zeppelinstrasse 32**
**W-7475 Messstetten(DE)**

(74) Vertreter: **Patentanwälte Leinweber & Zimmermann**
**Rosental 7/II Aufg.**
**W-8000 München 2(DE)**

## Beschreibung

Die Erfindung bezieht sich auf ein Meßgerät, insbesondere Waage, mit einem Sensor, dessen Ausgangssignal ein den Meßwert und seine Maßeinheit unmittelbar darstellender Digitalwert ist, einem von dem Sensor örtlich getrennten, eine Sichtanzeige aufweisenden Ausgabegerät für den Meßwert, das mit dem Sensor durch eine Signalleitung verbunden ist und einem als Träger der meßtechnischen Daten des Sensors dienenden Kennzeichnungsschild.

Bei der Verwendung derartiger Meßgeräte im eichpflichtigen Verkehr ist es nicht nur zweckmäßig, sondern auch gemäß nationalen und internationalen Eichvorschriften unerläßlich, daß das die meßtechnischen Daten ausweisende Kennzeichnungsschild in dar Nähe der den Meßwert anzeigenden Sichtanzeige angeordnet ist. Insbesondere beinhalten beispielsweise bei einer Waage die meßtechnischen Daten Angaben über die Höchstlast, die Teilung, den Tarierbereich u. dgl. Da andererseits aber die eindeutige Zuordnung des Kennzeichnungsschildes zu dem Sensor gewährleistet sein muß, darf bei den bekannten Meßgeräten der lediglich durch die Signalleitung hergestellte Zusammenhang zwischen dem Sensor und dem Ausgabegerät nicht gelöst werden. Soweit zwischen der Signalleitung und dem Sensor oder der Signalleitung und dem Ausgabegerät lösbare Kupplungen vorgesehen sind, sind daher diese Kupplungen bei den bekannten Meßgeräten mit Plomben gesichert, wobei diese Plomben bei einer Trennung zerstört werden. Die Zerstörung der Plombe zeigt sodann an, daß wegen einer Lösung des Zusammenhangs zwischen den Teilen eine neue Eichung vorgenommen werden muß. Also muß zur Vermeidung der Neueichung stets das gesamte Meßgerät im Verbund gehandhabt werden, was in der Praxis viele Nachteile nach sich zieht, insbesondere wenn die Ausgabegeräte oder die den Sensor enthaltenden Wägebrücken ortsbeweglich sind.

Der Nachteil einer erforderlichen Neueichung tritt insbesondere auch dann auf, wenn entweder die den Sensor enthaltende Wägebrücke oder das Ausgabegerät eine Störung erleidet und ausgetauscht werden muß. In diesem Fall müssen verschiedene Plombenstellen verletzt und anschließend die gesamte Anlage durch Neueichung wieder überprüft und plombiert werden. Dies ist insbesondere bei Großwaagen im höherlastigen Bereich von 500 kg und mehr sehr aufwendig und kostspielig. Erhebliche Schwierigkeiten ergeben sich auch bei Verbundwaagen, die aus mehreren, jeweils einen Sensor enthaltenden Wägebrücken bestehen, welche an ein einziges Ausgabegerät angeschlossen sind.

Ein weiterer Nachteil ergibt sich bei solchen Waagen, deren die Sensoren enthaltenden Wägebrücken für eine ebenerdige Befahrbarkeit in Gruben eingelassen sind. Für einen Zugang zu den an den Sensoren vorgesehenen Plombenstellen müßte die im allgemeinen sehr schwere Wägeplatte abgenommen werden, um die Unversehrtheit der in der Grube befindlichen Plombe zu überprüfen. Es ist also auch hier anzustreben, die Plombenstelle aus dem Bereich der Wägebrücke herauszunehmen und an einen leicht zugänglichen Ort zu verlegen.

Der Erfindung liegt die Aufgabe zugrunde, ein Meßgerät, insbesondere eine Waage der eingangs genannten Art dahingehend auszubilden, daß der Sensor oder das Ausgabegerät ohne eine Neueichung des gesamten Meßgerätes ausgetauscht werden können.

Diese Aufgabe wird erfindungsgemäß dadurch gelöst, daß das Kennzeichnungsschild an dem Ausgabegerät lösbar angeordnet und durch ein Verbindungsglied mit dem Sensor untrennbar verbunden ist.

Bei der Erfindung kann also das Ausgabegerät von dem Sensor getrennt werden, ohne daß der Zusammenhang zwischen dem für die Eichung maßgeblichen Kennzeichnungsschild und dem geeichten Sensor verlorengeht. Trotzdem braucht aber das Kennzeichnungsschild nicht an dem Sensor selbst angeordnet zu sein, sondern befindet sich an dem davon örtlich getrennten Ausgabegerät und damit in der Nähe der den Meßwert anzeigenden Sichtanzeige.

Eine besonders zweckmäßige Ausführungsform der Erfindung besteht darin, daß das Verbindungsglied durch die mit dem Sensor untrennbar verbundene Signalleitung gebildet ist, mit deren dem Ausgabegerät zugewandten Ende das Kennzeichnungsschild untrennbar zusammenhängt. Bei dieser Ausführungsform wird also die ohnehin erforderliche Signalleitung als Verbindungsglied verwendet, was einen sehr einfachen Aufbau zur Folge hat.

Besonders vorteilhaft ist in einer weiteren Ausgestaltung der Erfindung vorgesehen, daß die Signalleitung durch eine Bohrung des Kennzeichnungsschildes hindurchgeführt ist, deren Durchmesser größer als der Außendurchmesser der Signalleitung aber kleiner als das an dem Ausgabegerät lösbar angekuppelte Ende der Signalleitung ist. Diese Ausführungsform ermöglicht eine besonders einfache Handhabung, weil das Kennzeichnungsschild auf der Signalleitung beweglich ist und daher besonders einfach von dem Ausgabegerät abgenommen werden kann. Das gegenüber der Bohrung des Kennzeichnungsschildes verdickte Ende der Signalleitung sorgt sicher dafür, daß das Kennzeichnungsschild auf der Signalleitung gefangen ist und damit untrennbar mit dem Sensor verbunden bleibt.

Im Rahmen der Erfindung ist auch vorgesehen, daß der Sensor einen nicht flüchtigen Speicher für eine einen Codewert für die geltende Kalibrierung des Sensors darstellende Kennzahl aufweist, sowie eine zur selbsttätigen Weiterschaltung der Kennzahl um eine bestimmte Einheit bei jeder Nachkalibrierung und zur Einspeicherung dieser weitergeschalteten Kennzahl als neuen Codewert in den nicht flüchtigen Speicher dienende Einreichung, und daß ein mit der jeweils geltenden Kennzahl versehener Schriftträger an dem Kennzeichnungsschild angeordnet und dort mit einer Plombe gesichert ist. Sofern also der Sensor einer Nachkalibrierung, beispielsweise einer Nachstellung seiner Empfindlichkeit oder seiner Maßeinheit unterzogen wird, was beispielsweise durch vom Ausgabegerät aus über die Signalleitung eingegebene Steuerbefehle geschehen kann, wird selbsttätig die die vorher geltende Kalibrierung darstellende Kennzahl weitergeschaltet und gespeichert. Durch eine Abfrage dieser gespeicherten Kennzahl und einen Vergleich mit der auf dem Kennzeichnungsschild ersichtlichen Kennzahl kann also jederzeit festgestellt werden, ob der Eichzustand des Meßgerätes geändert worden ist. In diesem Fall ist eine Neueichung erforderlich, bei der schließlich die den Schriftträger und das Kennzeichnungsschild verbindende Plombe gelöst und auf dem Kennzeichnungsschild die neue Kennzahl angeordnet und verplombt wird. Dadurch ist der Nachweis einer eichamtlich einwandfreien Vorgehensweise erbracht.

In diesem Zusammenhang ist in einer baulich besonders vorteilhaften Ausführungsform vorgesehen, daß der Schriftträger durch eine an einem Flächenbereich des Kennzeichnungsschildes drehbar gelagerte Scheibe gebildet ist, die in azimutaler Richtung mit einer Folge der möglichen Kennziffern versehen ist, von denen nur die jeweils geltende durch ein Fenster des Kennzeichnungsschildes hindurch sichtbar ist, und daß die Drehstellung der Scheibe gegenüber dem Fenster durch die Plombe festgelegt ist. Bei dieser Ausführungsform braucht also nach der Neueichung nur die Scheibe soweit gedreht zu werden, bis die zutreffende Kennziffer in dem Fenster des Kennzeichzeichnungsschildes erscheint und in dieser Stellung die neue Plombe angebracht zu werden.

Gemäß einem weiteren Gedanken der Erfindung ist vorgesehen, daß die meßtechnischen Daten des Sensors auf einem Schriftträger angeordnet sind, der ebenfalls durch die Plombe an dem Kennzeichnungsschild gesichert ist. Durch diese Maßnahmen kann auf einfache Weise der Schriftträger durch einen neuen Schriftträger ersetzt werden, der die der neuen Eichung zugrundeliegenden meßtechnischen Daten des Sensors trägt. Die bei der Neueichung ohnehin neu anzubringende Plombe stellt sicher, daß der Schriftträger nicht unbemerkt ausgetauscht werden kann.

Eine besonders zweckmäßige weitere Ausgestaltung dieser Ausführungsform besteht darin, daß der Schriftträger für die meßtechnischen Daten des Sensors zwischen dem Ausgabegerät und dem formschlüssig an dem Ausgabegerät anliegenden Kennzeichnungsschild angeordnet ist, das im Bereich des Schriftträgers durchsichtig ausgebildet ist. Hierbei wird also der Schriftträger einfach zwischen dem Kennzeichnungsschild und der entsprechenden Anlagefläche des Ausgabegerätes formschlüssig eingeklemmt und ist durch den durchsichtigen Bereich des Kennzeichnungsschildes hindurch sichtbar und gleichzeitig geschützt.

Die Erfindung erstreckt sich auch auf den Gedanken, daß das Kennzeichnungsschild eine elektrische Abtasteinrichtung für die geltende Kennziffer des Schriftträgers aufweist und daß das Ausgabegerät eine Vergleichseinrichtung für die abgetastete und die im Sensor gespeicherte Kennzahl aufweist, welche bei Nichtübereinstimmung die Meßwertausgabe sperrt. Durch diese Maßnahmen wird das Meßgerät selbsttätig stillgelegt, wenn keine gültige Eichung mehr vorliegt.

Alternativ oder zusätzlich kann in einer anderen Ausführungsform jedoch auch vorgesehen sein, daß das Ausgabegerät eine Sichtanzeige für die in dem Sensor gespeicherte Kennzahl aufweist. Durch einen optischen Vergleich zwischen der an dem Ausgabegerät angezeigten Kennzahl und der auf dem Kennzeichnungsschild eingestellten Kennzahl kann also jederzeit festgestellt werden, ob noch Übereinstimmung besteht, d.h. eine gültige Eichung vorliegt.

Die Anordnung des Kennzeichnungsschildes an dem Ausgabegerät kann besonders einfach dadurch erfolgen, daß das Kennzeichnungsschild Rastvorsprünge aufweist, mit denen es an dem Ausgabegerät lösbar verrastet ist. Alternativ kann in einer anderen zweckmäßigen Ausführungsform vorgesehen sein, daß das Kennzeichnungsschild eine für eine Haftverbindung mit dem Ausgabegerät dienende Magnetanordnung aufweist. In beiden Fällen ist es somit möglich, das Kennzeichnungsschild durch einen einfachen Zug von Hand von dem Ausgabegerät zu lösen, wobei sodann nach Lösung der Kupplung zwischen der Signalleitung und dem Ausgabegerät das letztere getrennt von dem Sensor gehandhabt werden kann. Das Ausgabegerät kann somit im Falle einer Störung leicht ausgetauscht werden, ohne die für den Sensor geltende Eichung zu zerstören.In gleicher Weise kann auch der Sensor durch einen bereits geeichten anderen Sensor ersetzt werden.

Weitere Erläuterungen der Erfindung ergeben sich aus der folgenden Beschreibung und der Zeichnung. Hierin zeigen:

Fig. 1a    eine schematische Gesamtansicht einer Waage mit einem Ausgabegerät, einer Wägebrücke, einer verbindenden Signalleitung und einem Kennzeichnungsschild,

Fig. 1b    einen Schriftträger des Kennzeichnungsschildes, und

Fig. 2    eine Aufsicht auf das Ausgabegerät.

Bei einer in Fig. 1a dargestellten Waage ist in einer nicht dargestellten Wägebrücke ein Sensor 1 vorgesehen, durch den das Gewicht einer auf die Wägebrücke 1 aufgelegten Last erfaßt und in einen dem Gewicht der Last entsprechenden Meßwert umgewandelt wird. Der Sensor 1 ist derart aufgebaut, daß sein Ausgangssignal einen den Meßwert, also den Gewichtswert, und seine Maßeinheit unmittelbar darstellenden Digitalwert bildet. Das Ausgangssignal des Sensors 1 bedarf also keiner auswertenden Verarbeitung mehr, sondern kann zur Wiedergabe des Gewichtswertes unmittelbar angezeigt werden. Mit dem Sensor 1 ist eine Signalleitung 2 untrennbar verbunden, auf der das Ausgangssignal des Sensors 1 einem davon örtlich getrennten Ausgabegerät 3 zugeleitet wird. Eine in dem Ausgabegerät 3 vorgesehene Sichtanzeige 4 dient der visuellen Darstellung des Gewichtswertes und seiner Maßeinheit.

Während die das einzige Verbindungsglied zwischen dem Sensor 1 und dem Ausgabegerät 3 bildende Signalleitung 2 an ihrem an dem Sensor 1 gelegenen Ende untrennbar mit dem Sensor verbunden ist, bildet ihr zum Ausgabegerät 3 weisendes anderes Ende das eine Kupplungsteil 5 einer Steckkupplung, deren komplementäres Kupplungsteil 6 an dem Ausgabegerät 3 angeordnet ist. Mittels der aus den Kupplungsteilen 5 und 6 gebildeten Kupplung kann somit die Verbindung zwischen dem Ausgabegerät 3 und der Wägebrücke 1 getrennt werden, wie es in Fig. 1a dargestellt ist.

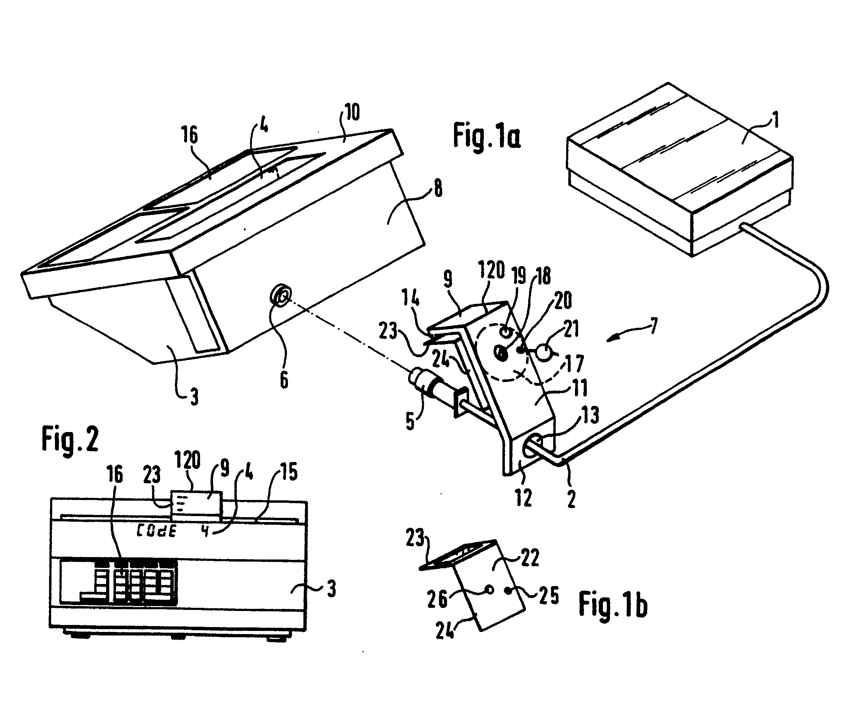

Ein winkelförmiges Kennzeichnungsschild 7, dessen Querschnittsprofil dem Querschnittsprofil der das komplementäre Kupplungsteil 6 aufweisenden Hinterseite 8 des Ausgabegerätes 3 entspricht, erstreckt sich gemäß Fig. 2 mit seinem einen Schenkel 9 über einen der Sichtanzeige 4 benachbarten Bereich der Frontseite 10 des Ausgabegerätes 3, während sich der andere Schenkel 11 vom Scheitel 120 aus über die Hinterseite 8 bis über das Kupplungsteil 6 hinaus erstreckt. Der freie Endbereich 12 des Schenkels 11 ist mit einer Bohrung 13 versehen, deren Durchmesser etwas größer ist als der Außendurchmesser der durch die Bohrung 13 hindurchgeführten Signalleitung 2. Dagegen ist der Durchmesser der Bohrung 13 kleiner als das an das Ausgabegerät 3 ankuppelbare endseitige Kupplungsteil 5 der Signalleitung 2. Hierdurch ist das Kennzeichnungsschild 7 auf der Signalleitung 2 gefangen und dadurch untrennbar mit dem Sensor 1 der Wägebrücke verbunden. Wenngleich also im verkuppelten Zustand der Kupplungsteile 5 und 6 das Kennzeichnungsschild 7 mittels einer am freien Ende des Schenkels 9 vorgesehenen Rastleiste 14, die in eine Rastausnehmung 15 des Ausgabegerätes 3 eingreift, formschlüssig mit dem Ausgabegerät 3 verbunden ist, ist es also möglich, durch Lösen der Rastverbindung und durch Trennung der Kupplungsteile 5, 6 die den Sensor 1 enthaltende Wägebrücke zusammen mit dem Kennzeichnungsschild 7 in der in Fig. 1a dargestellten Weise von dem Ausgabegerät 3 zu trennen.

Der in der Wägebrücke vorgesehene Sensor 1 ist ferner derart aufgebaut, daß durch über die Signalleitung 2 zugeführte Steuersignale Umkalibrierungen des Sensors, wie Änderungen der Empfindlichkeit oder der Maßeinheit oder Autokalibrierungen ausgelöst werden. Zu diesem Zweck ist das Ausgabegerät 3 mit einer Tastatur 16 versehen, über die entsprechende Steuerbefehle eingegeben werden können. Der Sensor 1 weist einen nicht flüchtigen Speicher auf, in dem eine einen Codewert für die geltende Kalibrierung des Sensors darstellende Kennzahl abgespeichert ist. Dieser Speicher kann beispielsweise durch einen EAROM gebildet sein. Eine in dem Sensor 1 ferner vorgesehene logische Einrichtung schaltet ansprechend auf jeden Befehl zur Nachkalibrierung diese Kennzahl um eine bestimmte Einheit weiter und speichert diese weitergestaltete Kennzahl als neuen Codewert in den nicht flüchtigen Speicher ein. Diese den neuen Codewert bildende Kennzahl kann, entweder permanent oder nach Aufruf durch eine bestimmte Taste der Tastatur 16 an dem Ausgabegerät 3, beispielsweise auf der Sichtanzeige 4, angezeigt werden.

An dem sich im angekuppelten Zustand längs der Hinterseite 8 des Ausgabegerätes 3 erstrekkenden Schenkel 11 des Kennzeichnungsschildes 7 ist eine Scheibe 17 drehbar gelagert, auf der längs eines zum Drehlager 18 konzentrischen Umfangskreises eine der Folge der möglichen Kennzahlen des Sensors entsprechende Folge von Kennzahlen unter gleichen Winkelabständen angeordnet ist. Der Schenkel 11 des Kennzeichnungsschildes 7 weist in einem radialen Abstand vom Drehlager 18, der dem radialen Abstand der Kennzahlen entspricht, ein Fenster 19 auf, durch das hindurch jeweils eine Kennzahl des von der Scheibe 17 gebildeten, an der dem Ausgabegerät 3 zugewandten Innenseite des winkelförmigen Kennzeichnungsschildes 7 angeordneten Schriftträgers sichtbar ist. Die Scheibe 17 weist in einem dem Winkelabstand der Kennzahlen entsprechenden Winkelabstand Bohrungen auf, von denen je eine mit einer Bohrung 20 des Schenkels 11 fluchtet, wenn gerade eine entsprechende Kennzahl mit dem Fenster 19 in Deckung ist. Der Durchmesser dieser Bohrungen erlaubt gerade den Durchtritt des Drahtes einer Plombe 21, durch die die Scheibe 17 jeweils in ihrer Drehstellung gegenüber dem Fenster 19 plombiert wird. Dabei wird nach einer erfolgten Eichung die in dem Fenster 19 sichtbare Kennzahl übereinstimmend mit der in dem nicht flüchtigen Speicher des Sensors 1 gespeicherten Kennzahl eingestellt. Ändert sich die Kalibrierung des Sensors 1, so ändert sich auch die Kennzahl im Speicher, so daß diese von der in dem Fenster 19 gespeicherten Kennzahl abweicht und dadurch die Notwendigkeit zur erneuten Eichung angezeigt wird. Im Zuge dieser amtlich durchzuführenden neuen Eichung wird schließlich die Scheibe 17 entsprechend nachgestellt und erneut plombiert.

Mit jeder Umkalibrierung und Neueichung ändern sich auch die maßgeblichen meßtechnischen Daten, die auf dem Kennzeichnungsschild 7 in der Nähe der Sichtanzeige 4 anzuzeigen sind. Zu diesem Zweck ist ein in Fig. 1b dargestellter, querschnittlich L-förmiger, weiterer Schriftträger 22 vorgesehen, dessen einer, mit den zutreffenden meßtechnischen Daten beschrifteter L-Schenkel 23 sich längs der am Ausgabegerät 3 anliegenden Innenfläche des Schenkels 9 des Kennzeichnungsschildes 7 erstreckt, während sich sein anderer L-Schenkel 24 längs dem mit der Bohrung 20 versehenen Schenkel 11 des Kennzeichnungsschildes 7 erstreckt. In dem L-Schenkel 24 ist eine mit der Bohrung 20 des Kennzeichnungsschildes 7 deckungsgleiche Bohrung 25 vorgesehen, die ebenfalls von dem Draht der Plombe 21 durchsetzt wird, wodurch auch der Schriftträger 22 mittels der Plombe 21 an dem Kennzeichnungsschild 7 und damit hinsichtlich seines Zusammenhangs mit dem Sensor 1 der Wägebrücke gesichert ist. Gegebenenfalls kann der L-Schenkel 24 im Bereich des Drehlagers 18 eine weitere Ausnehmung 26 aufweisen. Der Schenkel 9 des Kennzeichnungsschildes 7 ist durchsichtig, so daß in dem in Fig. 2 dargestellten, auf das Ausgabegerät 3 aufgerasteten Zustand des Kennzeichnungsschildes 7 die auf dem L-Schenkel 23 aufgedruckten meßtechnischen Daten des zwischen dem Ausgabegerät und der Innenseite des Kennzeichnungsschildes 7 eingeklemmten Schriftträgers 22 durch den Schenkel 9 hindurch sichtbar sind. Statt der lösbaren Befestigung mittels der Rastleiste 14 kann beispielsweise auch eine Magnetanordnung vorgesehen sein, durch die das Kennzeichnungsschild 7 mittels Magnetkraft an dem Ausgabegerät 3 festgehalten wird.

Dem Kennzeichnungsschild 7 kann ferner eine elektrische Abtasteinrichtung für die in dem Fenster 19 eingestellte, geltende Kennziffer zugeordnet sein, wenngleich dies in Fig. 1a nicht dargestellt ist. Sofern beispielsweise die Scheibe 17 mit der Folge der Zahlen von 1 bis 16 versehen ist, können auf ihr vier konzentrische Bahnen angeordnet sein, die gemäß einem vorgegebenen Codemuster abwechselnd aus elektrisch leitenden und nicht leitenden Schichten zusammengesetzt sind. Diese Bahnen werden jeweils mit einem Schleifkontakt elektrisch abgefühlt wodurch für jede in dem Fenster 19 eingestellte, geltende Kennzahl ein eindeutiger 4-Bit-Code erfaßt wird. Dieses Erfassungssignal wird von einer in dem Ausgabegerät 3 vorgesehenen Vergleichseinrichtung mit der in dem Sensor 1 gespeicherten Kennzahl verglichen. Bei Nichtübereinstimmung wird sodann die Meßwertausgabe des Ausgabegerätes 3 gesperrt.

Wie aus der vorstehenden Beschreibung hervorgeht, kann bei einer Störung des Ausgabegerätes 3 die Kupplung 5, 6 gelöst und das Kennzeichnungsschild 7 von dem Ausgabegerät 3 abgenommen werden und ein anderes Ausgabegerät angeschlossen werden. Der in der Wägebrücke vorgesehene Sensor 1 hat seinen Eichzustand dadurch nicht geändert, so daß eine Nacheichung nicht erforderlich ist. Das mit dem Sensor 1 untrennbar zusammenhängende Kennzeichnungsschild 7, das auf das neue Ausgabegerät aufgesteckt wird, behält damit seine Gültigkeit. Sollte jedoch der Sensor 1 gestört sein und deswegen ausgetauscht werden müssen, kann ohne weiteres ein neuer vorgeeichter Sensor 1, der mit der Signalleitung 2, dem Kennzeichnungsschild 7 und der darauf eingestellten und plombierten Kennzahl versehen ist, an das Auswertegerät 3 angeschlossen werden. Damit bleibt die gesamte Waage betriebsbereit, ohne daß eine Neueichung für die gesamte Waage erforderlich ist.

## Patentansprüche

1. Meßgerät, insbesondere Waage, mit einem Sensor (1), dessen Ausgangssignal ein den Meßwert und seine Maßeinheit unmittelbar darstellender Digitalwert ist, einem von dem Sensor örtlich getrennten, eine Sichtanzeige aufweisenden Ausgabegerät (3) für den Meßwert, das mit dem Sensor durch eine Signalleitung (2) verbunden ist und einem als Träger der meßtechnischen Daten des Sensors dienenden Kennzeichnungsschild (7), dadurch gekennzeichnet, daß das Kennzeichnungsschild (7) an dem Ausgabegerät (3) lösbar angeordnet und durch ein Verbindungsglied (2) mit dem Sensor (1) untrennbar verbunden ist.

2. Meßgerät nach Anspruch 1, dadurch gekennzeichnet, daß das Verbindungsglied durch die mit dem Sensor (1) untrennbar verbundene Signalleitung (2) gebildet ist, mit deren dem Ausgabegerät (3) zugewandten Ende (5) das Kennzeichnungsschild (7) untrennbar zusammenhängt.

3. Meßgerät nach Anspruch 2, dadurch gekennzeichnet, daß die Signalleitung (2) durch eine Bohrung (13) des Kennzeichnungsschildes (7) hindurchgeführt ist, deren Durchmesser größer als der Außendurchmesser der Signalleitung (2) aber kleiner als das an dem Ausgabegerät (3) lösbar angekuppelte Ende (5) der Signalleitung (2) ist.

4. Meßgerät nach einem der Ansprüche 1 bis 3, dadurch gekennzeichnet, daß der Sensor (1) einen nichtflüchtigen Speicher für eine einen Codewert für die geltende Kalibrierung des Sensors (1) darstellende Kennzahl aufweist, sowie eine zur selbsttätigen Weiterschaltung der Kennzahl um eine bestimmte Einheit bei jeder Nachkalibrierung und zur Einspeicherung dieser weitergeschalteten Kennzahl als neuen Codewert in den nichtflüchtigen Speicher dienende Einrichtung, und daß ein mit der jeweils geltenden Kennzahl versehener Schriftträger (17) an dem Kennzeichnungsschild (7) angeordnet und dort mit einer Plombe (21) gesichert ist.

5. Meßgerät nach Anspruch 4, dadurch gekennzeichnet, daß der Schriftträger durch eine an einem Flächenbereich des Kennzeichnungsschildes (7) drehbar gelagerte Scheibe (17) gebildet ist, die in azimutaler Richtung mit einer Folge der möglichen Kennziffern versehen ist, von denen nur die jeweils geltende durch ein Fenster (19) des Kennzeichnungsschildes (7) hindurch sichtbar ist, und daß die Drehstellung der Scheibe (17) gegenüber dem Fenster (19) durch die Plombe (21) festgelegt ist.

6. Meßgerät nach Anspruch 4 oder 5, dadurch gekennzeichnet, daß die meßtechnischen Daten des Sensors (1) auf einem Schriftträger (22) angeordnet sind, der ebenfalls durch die Plombe (21) an dem Kennzeichnungsschild (7) gesichert ist.

7. Meßgerät nach Anspruch 6, dadurch gekennzeichnet, daß der Schriftträger (22) für die meßtechnischen Daten des Sensors (1) zwischen dem Ausgabegerät (3) und dem formschlüssig an dem Ausgabegerät (2) anliegenden Kennzeichnungsschild (7) angeordnet ist, das im Bereich (23) des Schriftträgers (22) durchsichtig ausgebildet ist.

8. Meßgerät nach einem der Ansprüche 4 bis 7, dadurch gekennzeichnet, daß das Kennzeichnungsschild (7) eine elektrische Abtasteinrichtung für die geltende Kennziffer des Schriftträgers (17) aufweist und daß das Ausgabegerät (3) eine Vergleichseinrichtung für die abgetastete und die im Sensor (1) gespeicherte Kennzahl aufweist, welche bei Nichtübereinstimmung die Meßwertausgabe sperrt.

9. Meßgerät nach einem der Ansprüche 1 bis 8, dadurch gekennzeichnet, daß das Ausgabegerät (3) eine Sichtanzeige (4) für die in dem Sensor (1) gespeicherte Kennzahl aufweist.

10. Meßgerät nach einem der Ansprüche 1 bis 9, dadurch gekennzeichnet, daß das Kennzeichnungsschild (7) Rastvorsprünge (14) aufweist, mit denen es an dem Ausgabegerät (3) lösbar verrastet ist.

11. Meßgerät nach einem der Ansprüche 1 bis 9, dadurch gekennzeichnet, daß das Kennzeichnungsschild (7) eine für eine Haftverbindung mit dem Ausgabegerät dienende Magnetanordnung aufweist.

**Claims**

1. A measuring device, in particular scales, having a sensor (1), the output signal of which is a digital value directly representing the measured value and its unit of measurement, an output device (3) for the measured value, which device is locally separated from the sensor, has a visual display and is connected to the sensor by means of a signal line (2), and an identification plate (7) serving as a carrier of the metrological data of the sensor, characterized in that the identification plate (7) is detachably arranged on the output device (3) and is connected in an inseparable manner to the sensor (1) by means of a connecting element (2).

2. A measuring device according to claim 1, characterized in that the connecting element is formed by the signal line (2), which is connected to the sensor (1) in an inseparable manner and with the end (5) of which, said end facing the output device (3), the identification plate (7) is connected in an inseparable manner.

3. A measuring device according to claim 2, characterized in that the signal line (2) is guided through a borehole (13) of the identification plate (7), the diameter of which is greater than the outer diameter of the signal line (2), but is smaller than the end (5) of the signal line (2), which end is coupled in a detachable manner with the output device (3).

4. A measuring device according to one of claims 1 to 3, characterized in that the sensor (1) has a nonvolatile memory for an identification number which represents a code value for the significant calibration of the sensor (1) as well as a device serving to advance the identification number automatically by a certain unit in the case of each recalibration and to store this advanced identification number as a new code value in the non-volatile memory, and in that a type carrier (17) which is provided with the identification number which is significant in each case is arranged on the identification plate (7) and is secured there with a seal (21).

5. A measuring device according to claim 4, characterized in that the type carrier is formed by means of a disc (17) which is rotatably mounted on a planar region of the identification plate (7) and is provided in an azimuthal direction with a series of the possible identification numbers of which only that one which is significant in each case can be seen through a window (19) of the identification plate (7) and in that the rotational position of the disc (17) is fixed in relation to the window (19) by means of the seal (21).

6. A measuring device according to claim 4 or 5, characterized in that the metrological data of the sensor (1) is arranged on a type carrier (22) which is likewise secured by means of the seal (21) to the identification plate (7).

7. A measuring device according to claim 6, characterized in that the type carrier (22) for the metrological data of the sensor (1) is arranged between the output device (3) and the identification plate (7) which rests against the output device (2) [sic] in a form-locking manner and is formed in the region (23) of the type carrier (22) such that it is transparent.

8. A measuring device according to one of claims 4 to 7, characterized in that the identification plate (7) has an electric scanning device for the significant identification number of the type carrier (17) and in that the output device (3) has a comparison device for the scanned identification number and the one which is stored in the sensor (1), blocking the measured value output in the case of a non-match.

9. A measuring device according to one of claims 1 to 8, characterized in that the output device (3) has a visual display (4) for the identification number stored in the sensor (1).

10. A measuring device according to one of claims 1 to 9, characterized in that the identification plate (7) has latching projections (14) with which it latches on the output device (3) in a detachable manner.

11. A measuring device according to one of claims 1 to 9, characterized in that the identification plate (7) has a magnetic arrangement serving a cohesive connection with the output device.

**Revendications**

1. Appareil de mesure, en particulier balance, avec un capteur (1) dont le signal de sortie est une valeur numérique représentant directement une valeur de mesure et son unité de mesure, un appareil de sortie (3) pour la valeur de mesure, séparé localement du capteur et comportant une unité d'affichage visuel et qui est relié au capteur par une conduite de signal (2), et un panneau de caractérisation (7) servant de support des données techniques de mesure du capteur, caractérisé en ce que le panneau de caractérisation (7) est monté amoviblement sur l'appareil de sortie (3) et relié inséparablement au capteur (1) par un organe de liaison (2).

2. Appareil de mesure selon la revendication 1, caractérisé en ce que l'organe de liaison est constitué par la conduite de signal (2) reliée inséparablement au capteur (1), avec l'extrémité (5) de laquelle, tournée vers l'appareil de sortie (3), le panneau de caractérisation (7) est inséparablement combiné.

3. Appareil de mesure selon la revendication 2, caractérisé en ce que la conduite de signal (2) passe à travers un perçage (13) du panneau de caractérisation (7), dont le diamètre est plus grand que le diamètre extérieur de la conduite de signal (2) mais plus petit que l'extrémité (5) de la conduite de signal (2), accouplée de façon détachable à l'appareil de sortie (3).

4. Appareil de mesure selon l'une des revendications 1 à 3, caractérisé en ce que le capteur (1) comporte une mémoire non volatile pour un nombre caractéristique représentant une valeur de code pour le calibrage actuellement valable du capteur (1) ainsi qu'un dispositif servant à la commutation automatique de progression du nombre caractéristique d'une unité déterminée à chaque postcalibrage et pour l'emmagasinage de ce nombre caractéristique commuté en progression en tant que valeur de code dans la mémoire non volatile et en ce qu'un support d'écriture (17), pourvu respectivement du nombre caractéristique actuellement valable, est monté sur le panneau de caractérisation (7) et y est assujetti par un plomb (21).

5. Appareil de mesure selon la revendication 4, caractérisé en ce que le support d'écriture est formé par un disque (17) monté tournant sur une zone de surface du panneau de caractérisation (7) et qui est pourvu, en direction azimutale, d une suite des nombres caractéristiques possibles dont seul celui actuellement valable est visible à travers une fenêtre (19) du panneau de caractérisation (7) et en ce que la position rotative du disque (17) par rapport à la fenêtre (19) est fixée par le plomb (21).

6. Appareil de mesure selon la revendication 4 ou 5, caractérisé en ce que les données techniques de mesure du capteur (1) sont disposées sur un support d'écriture (22) qui est assujetti également par le plomb (21) au panneau de caractérisation (7).

7. Appareil de mesure selon la revendication 6, caractérisé en ce que le support d'écriture (22) pour les données techniques de mesure du capteur (1) est disposé entre l'appareil de sortie (3) et le panneau de caractérisation (7) s'appliquant par assemblage de forme contre l'appareil de sortie (2), lequel panneau est réalisé de façon à être transparent dans la zone (23) du support d'écriture (22).

8. Appareil de mesure selon l'une des revendications 4 à 7, caractérisé en ce que le panneau de caractérisation (7) comporte un dispositif d'exploration électrique pour le chiffre caractéristique actuellement valable du support d'écriture (17) et en ce que l'appareil de sortie (3) comporte un dispositif de comparaison pour le nombre caractéristique exploré et emmagasiné dans le capteur (1) lequel nombre caractéristique bloque la délivrance de la valeur mesurée lors d'une non concordance.

9. Appareil de mesure selon l'une des revendications 1 à 8, caractérisé en ce que l'appareil de sortie (3) comporte une unité d'affichage visuel (4) pour le nombre caractéristique emmaganisé dans le capteur (1).

10. Appareil de mesure selon l'une des revendications 1 à 9, caractérisé en ce que le panneau de caractérisation (7) comporte des saillies formant crans (14) avec lesquelles l'appareil de sortie (3) est amoviblement enclenché.

11. Appareil de mesure selon l'une des revendications 1 à 9, caractérisé en ce que le panneau de caractérisation (7) comporte un agencement d aimant servant à une liaison adhérente avec l'appareil de sortie.

Fig.1a

Fig.2

Fig.1b

EP 0 283 704 B1